(19) Europäisches Patentamt
European Patent Office
Office européen des brevets

(11) Veröffentlichungsnummer: **0 196 481 B1**

(12) **EUROPÄISCHE PATENTSCHRIFT**

(45) Veröffentlichungstag der Patentschrift: **09.05.90**

(51) Int. Cl.[5]: **B01D 53/34**

(21) Anmeldenummer: **86102877.7**

(22) Anmeldetag: **05.03.86**

# (54) Verfahren und Vorrichtung zum Abtrennen von Schadstoffen aus einem Trägergas.

(30) Priorität: **13.03.85 CH 1146/85**

(43) Veröffentlichungstag der Anmeldung: **08.10.86 Patentblatt 86/41**

(45) Bekanntmachung des Hinweises auf die Patenterteilung: **09.05.90 Patentblatt 90/19**

(84) Benannte Vertragsstaaten: **DE FR NL SE**

(56) Entgegenhaltungen:
**EP-A- 0 114 477**
**DE-A- 3 123 064**
**DE-A- 3 308 927**
**GB-A- 2 021 086**

(73) Patentinhaber: **VON ROLL AG, CH-4563 Gerlafingen(CH)**

(72) Erfinder: **Rüegg, Hans, Bremgartenstrasse 55a, CH-5610 Wohlen(CH)**

(74) Vertreter: **EGLI-EUROPEAN PATENT ATTORNEYS, Horneggstrasse 4, CH-8008 Zürich(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zum Abtrennen von Schadstoffen aus einem in einer Leitung geführten Trägergas, insbesondere von HCl, $SO_2$, HF und $NO_x$ aus Rauchgasen einer Müllverbrennungsanlage, wobei das Trägergas mit pulverartigem Absorptionsmittel in Kontakt kommt, so daß sich die Schadstoffe im Trägergas an das Absorptionsmittel zumindest teilweise binden und das Produkt aus Absorptionsmittel und gebundenen Schadstoffen sowie überschüssiges Absorptionsmittel und Flugasche zumindest teilweise aus dem Trägergas ausgefiltert wird.

Rauchgase, insbesondere aus Müllverbrennungsanlagen, enthalten in beträchtlichem Masse staub- und gasförmige Verunreinigungen. Die staubförmigen Verunreinigungen werden üblicherweise mit Tuch- und E-Filtern aus dem Rauchgas entfernt, bevor dieses in die Atmosphäre entlassen wird.

Gasförmige Emissionen können dagegen mit Gaswäschern nass, trocken oder quasi-trocken ausgewaschen werden, wobei sich der jeweilige Begriff auf den Wassergehalt des Rauchgases, nach Durchgang durch den Wäscher bezieht. Nasse Gaswäscher erzeugen ein mit Wasser gesättigtes Rauchgas, trockene Gaswäscher verwenden gar kein Wasser und quasi-trockene Wäscher verwenden zwar Wasser, jedoch nur soviel, dass das Rauchgas am Wäscheraustritt nicht gesättigt ist.

Ein bekanntes quasi-trockenes Verfahren ist in "Staub-Reinhaltung Luft 43 (1983) Nr.1, S. 34" beschrieben. Es verwendet als Reaktor einen Sprühtrockner mit Rotationszerstäuber, in welchem Kalkmilch in feinen Tropfen in das Rauchgas eingedüst wird. Der Kalk ($Ca(OH)_2$) reagiert mit der Salzsäure (HCl) und dem Schwefeldioxid ($SO_2$) im Rauchgas zu Salzen, wobei sich an der Oberfläche der Kalkteilchen eine Salzschicht bildet. Das Wasser der Kalkmilch verdampft dabei, was zu einer Temperaturabsenkung des Rauchgases um ca. 50 bis 100° C führt (von ca. 250° C auf ca 160° C). Die gebildeten Salze, der Flugstaub sowie der überschüssige Kalk werden in einem nachgeschalteten Staubfilter, meist Elektrofilter, aus dem Rauchgas entfernt. Zur Verminderung des Kalkverbrauchs wird ein Teil des abgeschiedenen Staubes mit Wasser vermischt und zusammen mit der Kalkmilch wieder in den Reaktor eingedüst. Durch den Kontakt mit Wasser wird die teilweise wasserlösliche Salzschicht auf der Kalkoberfläche aufgelöst und der Kalk dadurch wieder aktiviert.

Um sicherzustellen, dass keine Verstopfungen in Rohrleitungen und Zerstäubervorrichtung auftreten, darf eine bestimmte Maximalkonzentration von gelösten und ungelösten Stoffen in diesem Rückführschlamm nicht überschritten werden (ca. 30%). Bei vorgegebener Wassermenge und hoher Schadgasbelastung führt dies dazu, daß nur wenig Material rückgeführt werden kann, da sonst der Ballastanteil im Rückführschlamm (Salze und Flugstaub) zu groß und der aktive Kalkanteil zu klein wird. Dies bedeutet, daß große Mengen an noch aktivem wertvollem Absorptionsmittel ungenutzt bleiben und die Deponien belasten.

Im Gegensatz zu diesem quasi-trockenen Verfahren verwenden reine Trockenverfahren gar kein Wasser, wodurch die Vorteile der Reaktivierung durch Auflösen der Salzschicht an der Kalkoberfläche entfallen. Diese Verfahren zeichnen sich deshalb auch durch hohen Kalkverbrauch aus. Vorteilhaft ist jedoch ihr apparativ einfacher Aufbau, da nur trockenes Pulver transportiert werden muß (wenig Verstopfungen), außerdem ist der rezirkulierte Staubstrom nach oben nicht limitiert.

Diese erwähnten Verfahren sind im übrigen auch in der EP-A 0 114 477 näher beschrieben. Dort wird ein Verfahren und eine Vorrichtung aufgezeigt, bei dem ein entsprechendes Reaktionsgefäß einen Einlaß für heißes Rauchgas sowie für Absorptionsmittel besitzt, welches suspendiert oder gelöst in Wasser sein kann. Weiterhin besitzt es einen Einlaß für rezirkuliertes Trockenpulver. Das entsprechende Gemisch aus Rauchgas und Absorptionsmittel gelangt in einen Zyklon, in welchem das Pulver in zwei Teilströme aufgeteilt wird, wobei einer in die Reaktionskammer zurückgelangt, während der andere ausgetragen wird. Hierdurch gelangt zwar wieder Absorptionsmittel in den Kreislauf, allerdings ist dieses Absorptionsmittel bereits verbraucht, da es an das Rauchgas gebunden ist.

In der DE-A 3 308 927 ist wiederum ein Verfahren zur Bindung von in Rauchgasen enthaltenen gasförmigen Schadstoffen aufgezeigt, nach dem die Flugasche mit in ihr enthaltenen Mineralstoffen nach Abscheidung in einem Filter in trockener oder suspendierter Form den aus der Feuerung kommenden Rauchgasen wieder zugemischt wird. In einem anderen Teilstrom wird ein Teil ausgetragen. Auch hier ist nach wie vor das Absorptionsmittel an die entsprechende Flugasche gebunden, so daß es nur in geringem Umfange für eine neue Anlagerung zur Verfügung steht.

Der Erfinder hat sich zum Ziel gesetzt, die oben aufgezeigten Nachteile der bekannten Verfahren zu beseitigen, jedoch die Vorteile zu vereinigen und hohe Schadgasspitzen mit einem geringen Absorptionsmittelüberschuß zu eliminieren.

Zur Lösung dieser Aufgabe führt, daß das aus den Trägergasen herausgefilterte Produkt vereinigt und dann in drei Teilströme aufgeteilt wird, von denen ein erster Teilstrom wieder direkt in das Trägergas vor der Filtration in den Kreislauf geführt wird, ein zweiter Teilstrom mit Wasser zu einer schlammartigen Masse vermischt und dem ersten Teilstrom zugegeben wird, wobei durch den Kontakt mit Wasser das Salz von dem Absorptionsmittel zumindest teilweise abgelöst und dieses dadurch wieder aktiviert wird, und der dritte Teilstrom dem System entnommen wird.

Dies bedeutet, daß das mittels der Filter abgeschiedene Produkt vor seiner Rückleitung in den Trägergasstrom wieder aufgearbeitet wird. Die Zumischung des zweiten Teilstromes als pumpfähigen Schlamm erfolgt vorzugsweise mittels eines Pflugscharmischers. Das Produkt der Mischung ist ein rieselfähiges, staubiges bis schwach feuchtes Gut, das nicht zum Verkleben neigt und deshalb problemlos ohne großen apparativen Aufwand dem zu reinigenden Trägergas beigemischt werden kann.

Der große Vorteil der Erfindung liegt darin, daß die Kontaktierung des zweiten Teilstromes mit Wasser ein weitgehendes Ablösen der Salzschicht von der Absorptionsmitteloberfläche bewirkt, wodurch diese wieder aktiviert wird. Deshalb muß im gesamten Kreislauf wesentlich weniger Absorptionsmittel verbraucht bzw. aus dem Kreislauf ungenutzt entsorgt werden. Dies birgt eine erhebliche Kostenersparnis in sich. Bedingt durch die hohe Menge an umgewälzten Absorptionsmitteln werden Schadstoffspitzen sehr leicht eliminiert.

Im übrigen sollte die Temperatur des Rauchgases am Eintritt des Systems grösser als 200° C sein. Am Austritt kann die Temperatur bis auf 120° C absinken. Je nach der Trägergasmenge, die von Schadstoffen gereinigt werden soll, kann es sich als notwendig erweisen, dass mehrere der vorliegenden Anlagen parallel geschaltet eingesetzt werden und der Rauchgasstrom auf diese Systeme verteilt wird.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

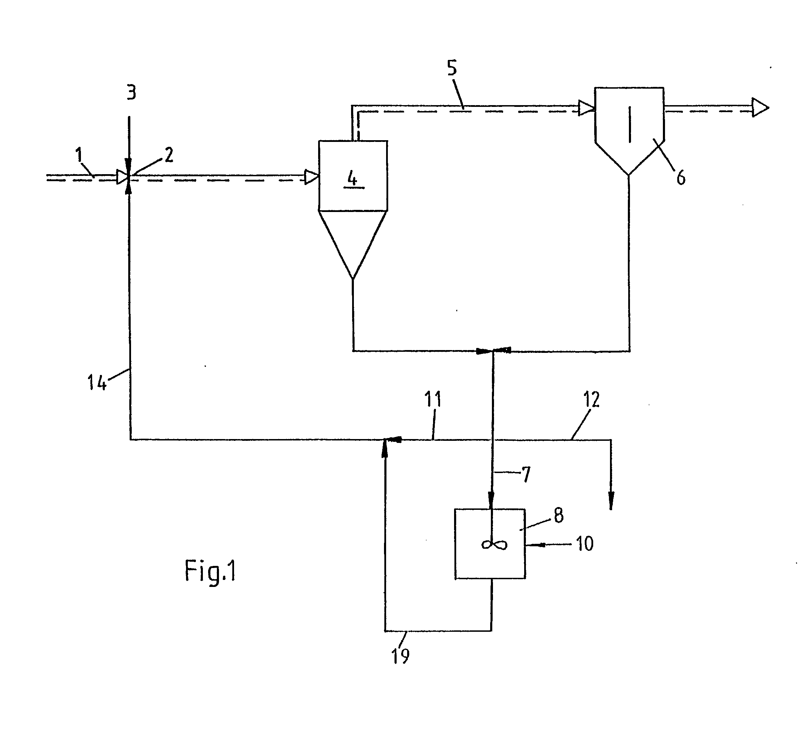

Figur 1 ein Blockschema des erfindungsgemässen Verfahrensablaufs;

Figur 2 ein Blockschema der Zuordnung der einzelnen Vorrichtungselemente zur Durchführung des Verfahrens nach Figur 1.

In einer Leitung 1 wird ein Rauchgas herangeführt, dem an einer Schnittstelle 2 über eine Zuleitung 3 ein Absorptionsmittel beigemischt wird. Diese Mischung gelangt in einen Grobabscheider 4, über eine weitere Leitung 5 in einen Feinabscheider 6 und von da nach aussen. Als Grobabscheider 4 wird beispielsweise ein Zyklon und als Feinabscheider ein Elektro- oder Gewebefilter verwendet.

Das im Grob- und Feinabscheider 4 und 6 abgetrennte Produkt wird vereinigt und dann wieder in drei Stoffströme aufgeteilt. Der als zweiter Teilstrom bezeichnete Strom 7 (ca. 10 %) gelangt in ein Mischgerät 8 und wird mit Wasser 10 zu einem pumpfähigen Schlamm angerührt, welcher dem ersten Teilstrom 11 (ca. 85 %) wieder zugemischt wird. Diese Zumischung erfolgt vorzugsweise mittels eines Pflugscharmischers 13. Das Produkt dieser Mischung ist ein rieselfähiges, staubiges bis schwachfeuchtes Gut, das nicht zum Verkleben neigt und deshalb problemlos ohne grossen apparativen Aufwand an der Schnittstelle 2 dem Rauchgas beigemischt werden kann. Die Kontaktierung des zweiten Teilstroms 7 mit Wasser 10 bewirkt ein weitgehendes Ablösen der Salzschicht von der Absorptionsmitteloberfläche, wodurch diese wieder aktiviert wird. Die Kontaktierung des Rauchgases mit dem schwachfeuchten Umwälzmaterial hat eine Trocknung und eine Temperaturabsenkung des Rauchgases zur Folge. Der dritte Teilstrom 12 (ca. 5 %) wird dem System entnommen und später deponiert.

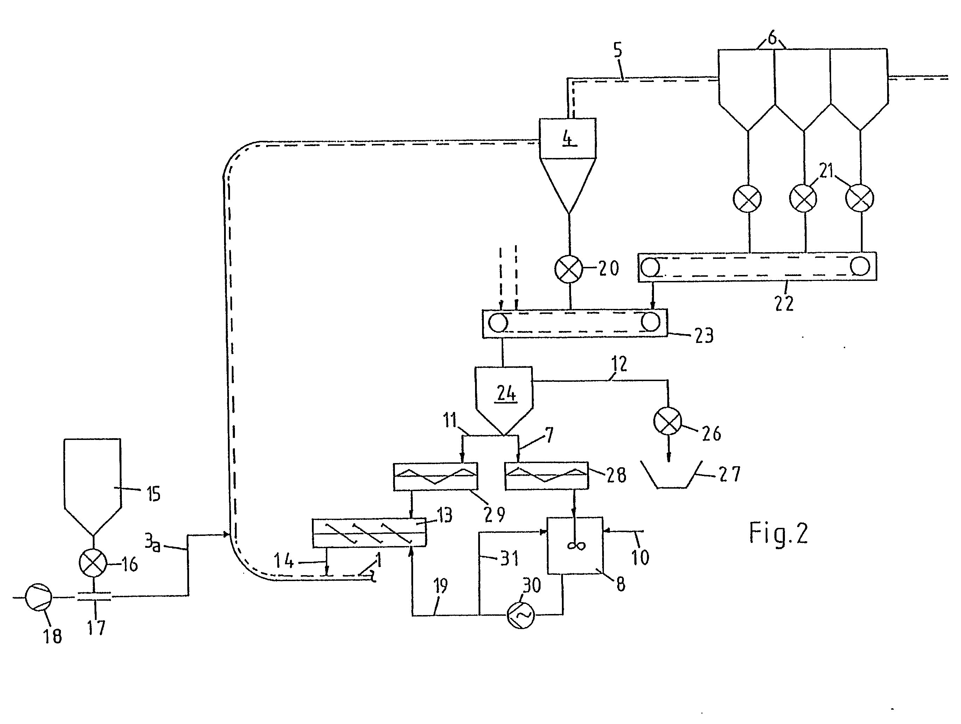

Frisches Absorptionsmittel, das den verbrauchten Anteil ersetzen muss, braucht nicht unbedingt über die Zuleitung 3 zugeführt, sondern kann irgendwo dem Kreislauf beigemischt werden, vorzugsweise jedoch nach Abtrennung des dritten Teilstromes 12. So zeigt beispielsweise Figur 2 eine Zuleitung 3a von frischem Absorptionsmittel nach der Staubbeimischung 14 aus dem Pflugscharmischer 13. Hierzu wird aus einem Silo 15 das Absorptionsmittel über eine Zellenradschleuse 16 in einen Injektor 17 geleitet und mittels eines Pneumatikgebläses 18 über die Zuleitung 3a in die Rauchgasleitung 1 eingeblasen.

Aus dem Grobabscheider 4 und den Feinabscheidern 6 gelangt das aus dem Rauchgas abgeschiedene Produkt über Zellenradschleusen 20 bzw. 21 auf Trogkettenförderer 22 bzw. 23 und von dort in ein Zwischensilo 24. Aus diesem Zwischensilo 24 führen die drei Teilströme 7, 11 und 12. Letzterer verlässt über eine weitere Zellenradschleuse 26 das System beispielsweise über eine Abführmulde 27 und wird deponiert. Der zweite Teilstrom 7 durchläuft einen Schneckenförderer 28 als Dosiergerät, bevor er in das Mischgerät 8 gelangt. Auch der erste Teilstrom 11 wird durch einen Schneckenförderer 29 geleitet, bevor er in dem Pflugscharmischer mit dem aus dem Mischgerät 8 zugeleiteten Schlamm vereinigt wird. In die Leitung 19 zwischen Mischgerät 8 und Pflugscharmischer 13 ist eine Schlammpumpe 30 eingesetzt, nach welcher über eine Zweigleitung 31 der Schlamm teilweise in das Mischgerät 8 zurückgeführt wird.

## Patentansprüche

1. Verfahren zum Abtrennen von Schadstoffen aus einem in einer Leitung geführten Trägergas, insbesondere von HCL, $SO_2$, HF und $NO_x$ aus Rauchgasen einer Müllverbrennungsanlage, wobei das Trägergas mit pulverartigem Absorptionsmittel in Kontakt kommt, so daß sich die Schadstoffe im Trägergas an das Absorptionsmittel zumindest teilweise binden und das Produkt aus Absorptionsmittel und gebundenen Schadstoffen sowie überschüssiges Absorptionsmittel und Flugasche zumindest teilweise aus dem Trägergas ausgefiltert wird, dadurch gekennzeichnet, daß das aus den Trägergasen herausgefilterte Produkt vereinigt und dann in drei Teilströme aufgeteilt wird, von denen ein erster Teilstrom wieder direkt in das Trägergas vor der Filtration in den Kreislauf geführt wird, ein zweiter Teilstrom mit Wasser zu einer schlammartigen Masse vermischt und dem ersten Teilstrom zugegeben wird, wobei durch den Kontakt mit Wasser das Salz von dem Absorptionsmittel zumindest teilweise abgelöst und dieses dadurch wieder aktiviert wird, und der dritte Teilstrom dem System entnommen wird.

2. Verfahren nach Anspruch 1, dadurch gekennzeichnet, daß als Absorptionsmittel Calziumhydroxyd, Magnesiumhydroxyd oder ein anderer Stoff mit absorptiven Eigenschaften oder ein Gemisch dieser Stoffe mit dem Trägergas in Kontakt gebracht wird.

3. Verfahren nach Anspruch 1 oder 2, dadurch gekennzeichnet, daß der zweite Teilstrom in den ersten Teilstrom solange eingemischt wird, bis aus beiden Strömen ein homogenes, maximal schwachfeuchtes Gemisch entsteht.

4. Verfahren nach Anspruch 3, dadurch gekennzeichnet, daß der Wassergehalt des Gemisches zwischen 3 und 30%, vorzugsweise zwischen 4 und 10% beträgt.

5. Anlage zum Abtrennen von Schadstoffen aus einem, in einer Leitung (1) geführten Trägergas, insbesondere von HCL, $SO_2$, HF, $NO_x$ aus Rauchgasen einer Müllverbrennungsanlage, wobei das Trägergas mit einem pulverartigen Absorptionsmittel in Kontakt kommt, so daß sich die Schadstoffe im Trägergas an das Absorptionsmittel zumindest teilweise binden und in die Trägergasleitung (1) Filter (4, 6) zum zumindest teilweisen Ausfiltern des Produkts aus Absorptionsmittel und gebundenen Schadstoffen, wie Reaktionssalzen, sowie überschüssigen Absorptionsmitteln und Flugasche eingeschaltet sind, dadurch gekennzeichnet, daß die aus den Filtern (4, 6) ausgefilterten und anschließend vereinigten Produkte in Teilströme (7, 11, 12) aufgeteilt sind, von denen ein erster Teilstrom (11) einen Teil des Produktes in die Trägergasleitung (1) zurückführt, und ein zweiter Teilstrom (7) einen weiteren Teil des Produktes in ein Mischgerät (8) einleitet, in welches auch eine Wasserleitung (10) einmündet, wobei das Mischgerät (8) über eine Leitung (19) wieder mit der Trägergasleitung (1) in Verbindung steht und die Leitung (19) aus dem Mischgerät (8) mit dem ersten Teilstrom (11) verbunden ist, sowie ein dritter Teilstrom (12) einen Teil des Produktes aus dem Kreislauf austrägt.

6. Anlage nach Anspruch 5, dadurch gekennzeichnet, daß die Leitung (19) und der erste Teilstrom (11) in einen Mischer (13), vorzugsweise einen Pflugscharmischer, einmünden, welcher über eine Staubbeimischungsleitung (14) mit der Trägergasleitung (1) verbunden ist.

7. Anlage nach Anspruch 5, dadurch gekennzeichnet, daß der Filter (4) als Grobabscheider ausgebildet ist, dem der als Feinabscheider ausgebildete Filter (6) nachgeschaltet sind.

8. Anlage nach Anspruch 7, dadurch gekennzeichnet, daß als Grobabscheider (4) ein Zyklon und als Feinabscheider (6) Elektro- oder Gewebefilter Anwendung finden.

9. Anlage nach einem der Ansprüche 5, 7 und 8, dadurch gekennzeichnet, daß die Filter (4, 6) mit der Trägergasleitung (1) verbunden sind, und so das ausgefilterte Produkt zumindest teilweise wieder in das Trägergas gelangt.

**Claims**

1. Method of removing pollutants from a carrier gas conducted through a pipe, in particular HCL, $SO_2$, HF and $NO_x$, from furnace gas from an incinerator plant, in which the carrier gas comes into contact with powdery absorbents, so that the pollutants in the carrier gas at least partly combine and that the product of adsorbens and the combined pollutants as well as excess adsorbents and flue dust at least partly are filtered out of the carrier gas, characterized in that the product filtered out of the carrier gases is united and then divided into three partial flows, of which a first one is conducted directly back to the carrier gas before the filtration in the circuit, a second partial flow being blended with water to form a muddy substance, that is added to the first partial flow, so that, by the contact with the water, the salt at least partially is separated from the adsorbent, which thereby is reactivated, and that the third partial flow is withdrawn from the system.

2. Method according to claim 1, characterized in that as adsorbent calcium hydroxide, magnesium hydroxide or another substance with adsorptive characteristics or a blend of these substances are brought into contact with the carrier gas.

3. Method according to claim 1 or 2, characterized in that the second partial flow is introduced into the first partial flow as long as a homogeneous maximum light wet blend results.

4. Method according to claim 3, characterized in that the water content of the blend is between 3% and 30%, preferably between 4% and 10%.

5. Apparatus for the separation of pollutants from a carrier gas conducted in a pipe (1), in particular of HCL, $SO_2$, HF, and $NO_x$ from furnace gases in an incinerator plant, in which the carrier gas comes into contact with a powdery adsorbent, so that the pollutants in the carrier gas at least partly combine with the adsorbent and at least partly filter out in filter (4, 6) in the carrier gas pipe (1) as a product of adsorbent and combined pollutants, such as reactive salts, as well as excess adsorbents and flue dust, characterized in that the combined products filtered out of the filters (4, 6), which thereafter are united, are divided into partial flows (7, 11, 12), of which a first partial current (11) is led back to the carrier gas pipe (1) and a second partial flow (7) introduces a further portion of the product into a mixing device (8), to which a water pipe (10) is connected, so that this device (8) is also connected with the carrier gas pipe (1) via a pipe (19), which pipe (19) from the mixing device (8) is connected with the first partial flow (11), and that a third partial flow (12) carries a portion of the product out of the circuit.

6. Apparatus according to claim 5, characterized in that the pipe (19) and the first partial flow (11) enter a mixing device (13), preferably a plowshare mixer, which is connected with the carrier gas pipe (1) via a dust addition pipe (14).

7. Apparatus according to claim 5, characterized in that the filter (4) is designed as a coarse filter, followed by a fine filter (6).

8. Apparatus according to claim 7, characterized in that a cyclone is used as a coarse filter (4) and an electric or tissue filter is used as fine filter (6).

9. Apparatus according to claim 5, 7 and 8, characterized in that the filters (4, 6) are connected with the carrier gas pipe (1), so that at least a portion of the filtered-out product is brought back to the carrier gas.

**Revendications**

1. Procédé pour séparer des substances polluantes d'un gaz de support guidé dans un conduit, en particulier HCl, $SO_2$, HF et $NO_x$ contenues dans des gaz de fumées d'une installation d'incinération d'ordures, le gaz de support venant en contact avec un absorbant pulvérulent, de manière que les substances polluantes contenues dans le gaz de support se lient au moins partiellement à l'absorbant, et que le produit formé par l'absorbant et les substances polluantes liées, ainsi que l'absorbant excédentaire et les cendres volantes soient au moins partiellement séparés par filtration du gaz de support, caractérisé en ce que le produit séparé des gaz de support par filtration est épuré et est partagé en trois courants partiels dont un premier courant partiel est réintroduit dans le circuit, directement dans le gaz de support avant la filtration, un deuxième courant partiel est additionné d'eau pour former une masse boueuse et ajouté au premier courant partiel, le contact avec l'eau ayant pour effet que le sel est au moins partiellement détaché de l'absorbant et que celui-ci est réactivé, et le troisième courant partiel est prélevé du circuit.

2. Procédé selon la revendication 1, caractérisé en ce que comme absorbant, on amène en contact avec le gaz de support, de l'hydroxyde de calcium, de l'hydroxyde de magnésium ou une autre substance présentant un pouvoir absorbant, ou un mélange de ces substances.

3. Procédé selon la revendication 1 ou 2, caractérisé en ce que le deuxième courant partiel est mélangé au premier courant partiel jusqu'à ce que ces deux courants forment un mélange homogène, au maximum faiblement humide.

4. Procédé selon la revendication 3, caractérisé en ce que la teneur en eau du mélange se situe entre 3 et 30%, de préférence entre 4 et 10%.

5. Installation pour séparer des substances polluantes d'un gaz de support guidé dans un conduit (1), en particulier HCl, $SO_2$, HF, $NO_x$ contenues dans des gaz de fumées d'une installation d'incinération d'ordures, le gaz de support venant en contact avec un absorbant pulvérulent, de manière que les substances polluantes contenues dans le gaz de support se lient au moins partiellement à l'absorbant et que des filtres (4, 6) soient montés dans le conduit (1) du gaz de support pour filtrer au moins partiellement le produit formé par l'absorbant et les substances polluantes liées, telles que les sels de réaction, ainsi que des absorbants excédentaires et des cendres volantes, caractérisée en ce que les produits séparés par les filtres (4, 6) puis épurés sont partagés en courants partiels (7, 11, 12) dont un premier courant partiel (11) recycle une partie du produit dans le conduit (1) du gaz de support, et un deuxième courant partiel (7) introduit une autre partie du produit dans un mélangeur (8) dans lequel débouche aussi un conduit d'eau (10), le mélangeur (8) étant relié par un conduit (19) au conduit (1) du gaz de support et ce conduit (19) ressortant du mélangeur (8) étant relié au premier courant partiel (11), et un troisième courant partiel (12) évacue du circuit une partie du produit.

6. Installation selon la revendication 5, caractérisée en ce que le conduit (19) et le premier courant partiel (11) débouchent dans un mélangeur (13), de préférence un mélangeur à soc de charrue, qui est relié au conduit du gaz de support (1), par un conduit d'addition de poussières (14).

7. Installation selon la revendication 5, caractérisée en ce que le filtre (4) est un séparateur grossier en aval duquel est monté le filtre (6) qui est un séparateur fin.

8. Installation selon la revendication 7, caractérisée en ce qu'on utilise comme séparateur grossier (4), un cyclone et comme séparateur fin (6) un filtre électrique ou filtre à tissu.

9. Installation selon l'une des revendications 5, 7 et 8, caractérisée en ce que les filtres (4, 6) sont reliés au conduit de gaz de support (1) et qu'ainsi le produit séparé par filtration parvient au moins partiellement à nouveau dans le gaz de support.

1
2
3
4
5
6
7
8
10
11
12
14
19

Fig.1

1
4
5
6
7
8
10
11
12
13
14
15
16
17
18
19
20
21
22
23
24
26
27
28
29
30
31
$3_a$

Fig.2